Europäisches Patentamt

European Patent Office

Office européen des brevets

(11) Publication number: **0 117 611**
A2

# EUROPEAN PATENT APPLICATION

(21) Application number: 84300310.4

(22) Date of filing: 18.01.84

(51) Int. Cl.³: **B 62 D 1/16**

(30) Priority: 29.01.83 JP 11959/83

(43) Date of publication of application: 05.09.84
Bulletin 84/36

(84) Designated Contracting States: DE FR GB IT

(71) Applicant: TOYOTA JIDOSHA KABUSHIKI KAISHA, 1,
Toyota-cho Toyota-shi, Aichi-ken 471 (JP)

(72) Inventor: Hoshino, Shigeru, 161 Banchi, 1-chome
Ohbayashi-cho, Toyota-shi Aichi-ken (JP)
Inventor: Miyata, Hiroshi, Dai 2 Ekaku Apart.
B917 56 Banchi 2-chome, Ekakushinmachi Toyota-shi
Aichi-ken (JP)

(74) Representative: Ben-Nathan, Laurence Albert et al, c/o
MICHAEL BURNSIDE & PARTNERS 2 Serjeants' Inn
Fleet Street, London EC4Y 1HL (GB)

(54) Apparatus for detecting a steering angle and a steering angular velocity of a vehicle.

(57) An apparatus for detecting a steering angle and a steering angular velocity of a steering system mounted in a vehicle. The apparatus has a sensor (16) mounted with respect to a steering column tube (18) on a lower steering column tube (20) secured to the lower end of the tube (18) coaxially therewith and a disc (14) secured onto the outer periphery of a steering shaft (12). The steering sensor has a projecting form in which a light emitting element (160) and a light receiving element (162) are provided. The projecting form of the sensor is designed so as to prevent the light emitting element (160) and the light receiving element (162) from contacting the disc (14).

- 1 -

APPARATUS FOR DETECTING A STEERING ANGLE
AND A STEERING ANGULAR VELOCITY OF A VEHICLE

The present invention relates to an apparatus for detecting a steering angle and angular velocity of a steering wheel of a vehicle, and particularly to a steering sensor for detecting a steering angle and steering angular velocity.

Heretofore, an apparatus for detecting a steering angle and a steering angular velocity is generally known, comprising a disc mounted on a steering shaft, and a sensor secured with respect to a steering column tube. The disc is designed to be rotated with the steering shaft, and has a number of small holes which are concentrically located thereon. The sensor has a light emitting element and a light receiving element, which are located on the opposite sides of the disc at positions opposite the series of holes in the disc. When the steering shaft is rotated by a driver, the disc rotates with the steering shaft. In this condition, the light transmitted from the light emitting element to the light receiving element is interrupted by the rotation of the disc. The degree of the interruption is proportional to the number of the rotations of the disc. The degree of the interruption is converted to an electric pulse and thereafter the steering angle and a steering angular velocity are calculated by the electric pulse. The present Applicants have described an invention concerning the detailed structure of the sensor and the disc in European Patent Application No. 84300080.3.

The sensor of the apparatus for detecting a steering angle and a steering angular velocity according to the aforesaid prior art, has been mounted on a gear box or a bearing wheel of the steering system. This mounting results in the following disadvantages:

(a) As there is limited space to mount the sensor on a gear box or a bearing wheel, it is difficult to assemble the sensor in the required position.

(b) It is difficult to provide for movement of parts of the steering system to absorb steering impact energy generated when the vehicle crashes.

(c) If the steering system includes a tilting device, the accuracy of the sensor cannot be maintained when the tilting device is operated.

(d) It is difficult to operate the steering wheel.

(e) It requires a cover to protect the sensor from stones, dust or water.

The present invention was made in view of the foregoing background art. It is an object of this invention to provide an improved apparatus for detecting a steering angle and a steering angular velocity of a steering wheel of a vehicle which overcomes or minimizes the above-mentioned disadvantages.

To attain the above object, an apparatus according to the present invention includes a steering wheel operated by a driver and a steering shaft to which the steering wheel is connected at an upper end of the shaft. A disc is mounted on and rotatable with the steering shaft. The disc has a number of holes, which are concentrically arranged therein. The steering shaft is rotatably mounted in a steering column tube. A lower steering column tube is secured to the lower end of the steering column tube coaxially therewith. A sensor, which has a light emitting element and a light receiving element for receiving the light emitted by the light emitting element, is mounted on the lower steering column tube.

The above object, features and advantages of the present invention will become more apparent from the following description of the preferred embodiment taken in conjunction with the accompanying drawings.

Fig. 1 is a perspective view of a steering system provided with an apparatus according to the present invention;

Fig. 2 is a perspective view of a steering shaft provided with detecting means according to the present invention;

Fig. 3 is an enlarged partial cross-sectional view of the embodiment of the present invention;

Fig. 4 is a partial cross-sectional view taken along the line IV-IV in Figure 2;

Fig. 5 is a reduced partial cross-sectional view taken along the line V-V in Figure 2;

Fig. 6 is a cross-sectional view taken along the line VI-VI of Figure 5; and

Figs. 7(a), (b), (c) and (d) are views which illustrate the assembling steps of the disc and the sensor according to the present invention.

The present invention is described in detail with reference to the accompanying drawings which illustrate different embodiment of the present invention.

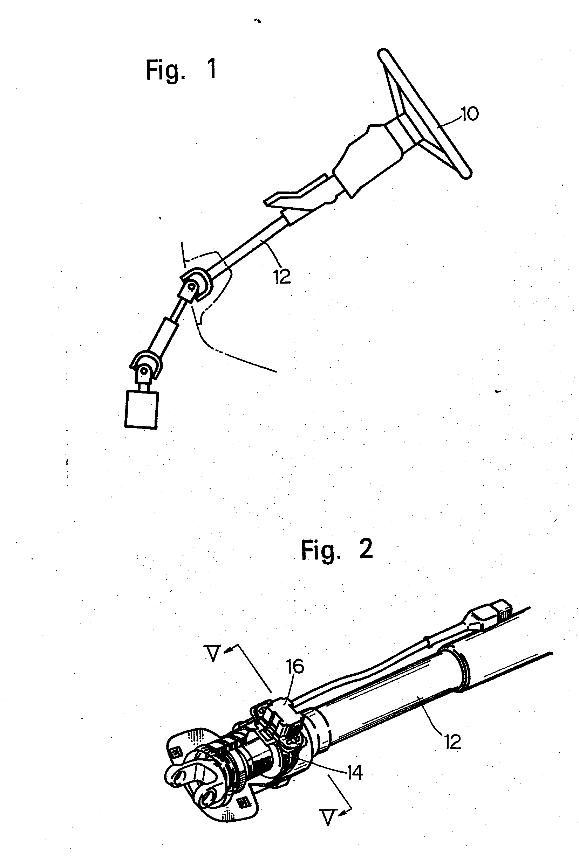

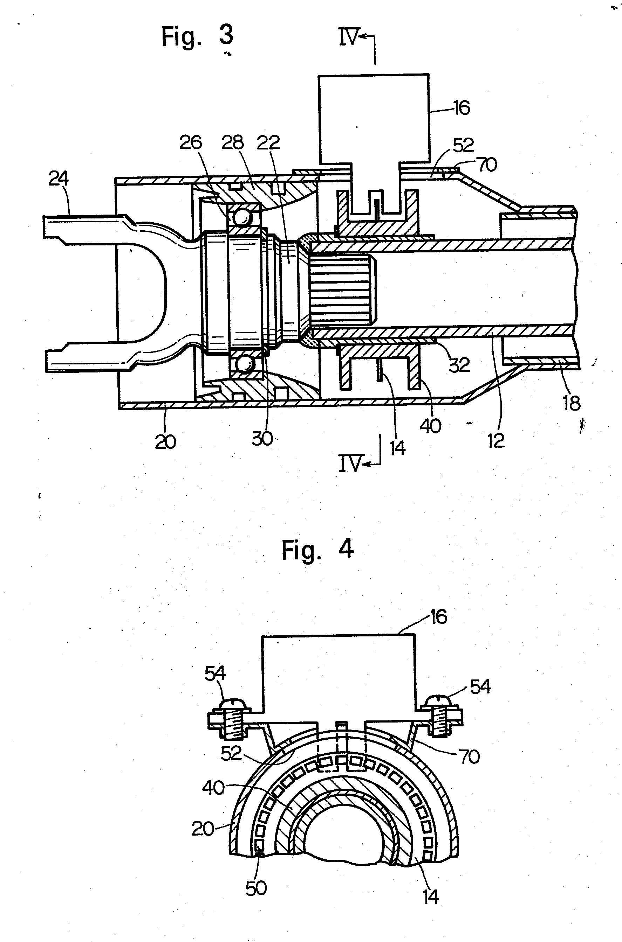

Figure 1 shows a perspective view of a steering system provided with an apparatus according to the present invention is applied to. The rotational movement of a steering wheel 10 is transmitted through a steering shaft 12 to wheels (not shown in drawings). The perspective view of the steering shaft according to the present invention is shown in Figure 2. A disc 14, which includes a number of small holes concentrically located therein, is mounted on the outer periphery of the steering shaft 12. A sensor 16 is located at the outer side of the disc 14, and is secured to a steering column tube. Figure 3 shows an enlarged detailed cross-sectional view of the apparatus according to the present invention.

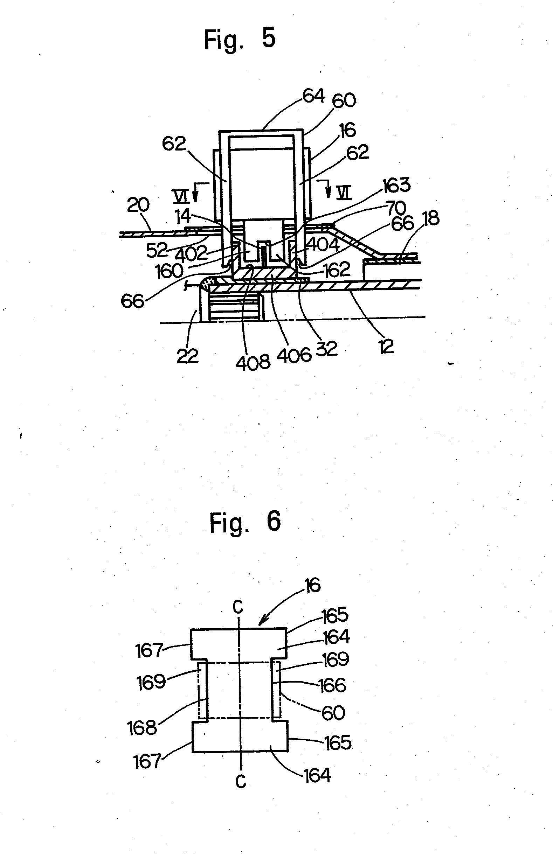

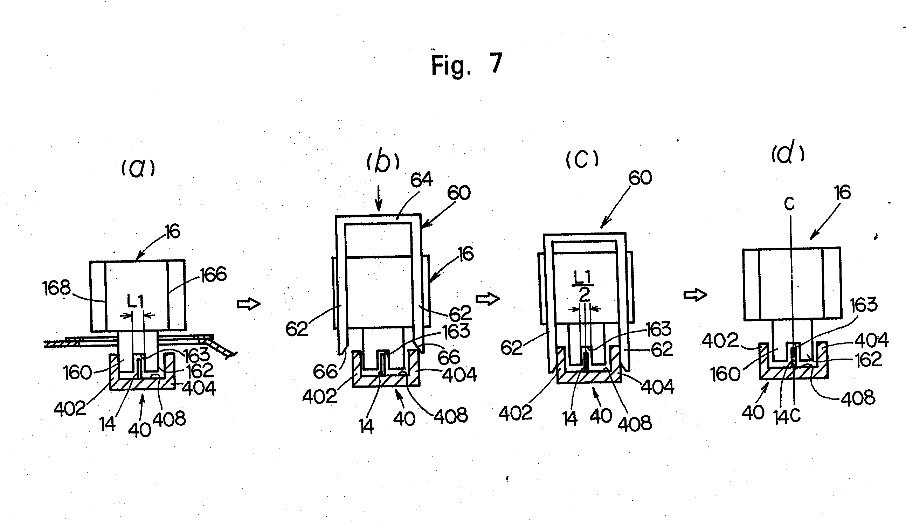

A steering column tube 18 extends downwards (the left direction in Figure 3), and an enlarged lower steering column tube 20 is secured to the lower portion of the steering column tube 18. The steering shaft 12 is inserted in the steering column tube 18. The steering wheel 10 is connected to the upper end of the steering shaft 12. The lower part of the steering shaft 12 extends within the lower steering column tube 20. The lower end of the steering shaft 12 is fixed by welding to a shaft portion 22 of a yoke 24. A lower bearing 26 is provided on the outer periphery of the shaft portion 22 of the yoke 24. The lower bearing 26 is secured by a retainer 28 to the inner face of the lower steering column tube 20. A snap ring 30, provided on the outer periphery of the shaft portion 22 of the yoke 24, prevents the lower bearing 26 from slipping out. A collar 32 is fitted onto the outer periphery of the steering shaft 12 and is welded to the steering shaft 12. A holder 40 is press fitted onto the outer periphery of the collar 32. The holder 40 has a U-shaped cross-sectional form. The holder 40 is to hold the disc 14 thereon. Figures 5 and 7 illustrate the detailed structure of the holder 40. The holder 40 has side walls 402 and 404, and a tubular portion 406 which connects the side walls 402 and 404. The disc 14 is secured to the central point of the outer surface 408 of the tubular portion 406. The disc 14, as shown in Figure 4, includes a number of small holes 50, which are of the same form and are positioned concentrically with respect to the axis of the disc 14 at regularly spaced intervals. The lower steering column tube 20 has an aperture 52 at a position facing the holder 40. The aperture 52 is square. The lower part of the sensor 16 extends through the aperture 52 into the inside of the lower steering column tube 20. The sensor 16 is fastened by screws 54 to a sensor mounting bracket 56. The bracket 56 is fixed to the lower steering column tube 20, as shown in Figure 4.

The sensor 16 has a main portion 164 of a hexagonal cross-sectional form, a light emitting element 160, and a light receiving element 162, both of which are secured to the bottom face of the main portion 164. The light emitting

element 160 and a light receiving element 162 are separated from each other by a distance "$L_1$". The disc 14 is located on the central point of the distance "$L_1$". The sensor 16 has front side faces 165, a front intermediate side face 166, rear side faces 167, and a rear intermediate side face 168 as shown in Figure 6. The sensor 16 is symmetrical with regard to a center plane "C-C" shown in Figure 6. The distance between the front intermediate side face 166 and the rear intermediate side face 168 is designed to be substantially the same as that defined between the outer faces of the side walls 402 and 404 of the holder 40. The light emitting element 160 and the light receiving element 162 are provided at the symmetrical positions with regard to a central plane "C-C" through the sensor 16 shown in Figure 7(d). The light emitting element 160 is designed to have the same thickness as that of the light receiving element 162. There is provided a groove whose distance is "$L_1$" between the light emitting element 160 and the light receiving element 162.

The numeral 60 shown in Figures 5, 6 and 7 designates a jig for avoiding contact of the thin disc 14 with the light emitting element 160 or the light receiving element 162 when assembling the sensor 16 in the correct position. The jig 60 has a pair of legs 62, and a bridge portion 64. The pair of legs 62 extend in parallel each other. The bridge portion 64 connects one of the legs 62 with the other leg. The jig 60 has a cross-sectional form of a U-shape. The distance between the inner faces of the legs 62 is designed to be same as that defined between the front intermediate side face 166 and the rear intermediate side face 168 of the holder 40. As the distance between the front intermediate side face 166 and the rear intermediate side face 168 of the holder 40 is designed to be same as that defined between the outer faces of the side walls 402 and 404, the distance between the inner faces of the legs 62 is designed to be same as that defined between the outer faces of the side walls 402 and 404. Each of the legs 62 has an inclined tip end 66, and each of the tip ends is oppositely inclined. Each of the legs 62 of the jig 60 is fitted onto the outer face of the side walls 402 or 404 of the holder 40, thereby the jig 60 tightly grips the holder 40.

The sensor 16 is assembled into the steering as following procedure:

At first, the sensor 16 is held such that the light emitting element 160 contacts the inner face of the side wall 402 of the holder 40, as shown in Figure 7(a). Next, the jig 60 is inserted from above onto the sensor 16, and the legs 62 of the jig 60 fit into grooves 169 defined in the sensor 16 shown in Figure 6. One of the inclined low ends of the legs 62 contacts with the outer periphery of the top end of the holder 40 as shown in Figure 7(b), thereafter both legs 62 are forced to move downward while keeping the contact with the outer surface of the side walls 402 and 404. The center plane "C-C" of the sensor 16 becomes coincident with the plane of the disc 14. The sensor 16 is fastened by the sensor bracket 70 to the lower column tube 20 by screws 54 as shown in Figure 4. Finally, the jig 60 is removed from the sensor 16.

When the sensor 16 is assembled in the steering column, the disc 14 does not contact with the light emitting element 160 or the light receiving element 162. Hence, the disc 14 is not damaged during assembly. The sensor 16 can therefore detect accurately the steering angle and steering angular velocity. Workers can promptly assemble the sensor into the steering column by the use of the jig. Further, the jig can protect the disc from being adversely affected by striking with the light emitting element or the light receiving element when the steering column is transferred.

While the present invention has been described in its preferred embodiment, it is to be understood that the invention is not limited thereto, and other embodiments are possible within the scope of the following Claims.

CLAIMS

1. An apparatus for detecting a steering angle and a steering angular velocity of a rotatable part of a steering system mounted on a vehicle, comprising a steering wheel (10), a steering shaft (12) to which the steering wheel (10) is connected at an end thereof, a disc (14) having a number of holes (50) concentrically located therein, a steering column tube (18) in which the steering shaft (12) is rotatably mounted, a lower steering column tube (20) secured to an end of the steering column tube (18) coaxially therewith, a sensor (16), having positioned on respective opposite sides of the disc, a light emitting means (160) and a light receiving means (162) at locations opposite said holes (50) in the disc (14), characterized in that the disc (14) is mounted on and rotatable with the steering shaft (12) and that the sensor (16) is mounted on the lower steering column tube (20).

2. An apparatus as claimed in Claim 1, further comprising a holder (40) secured to the outer periphery of the steering shaft (12), the holder (40) having the disc (14) secured thereto at a central position along the length of the holder (40).

3. An apparatus as claimed in Claim 2, wherein the holder (40) comprises a longitudinal portion (406) which contacts the outer periphery of the steering shaft (12) and extends in the same longitudinal direction as that of the steering shaft (12) and a projecting portion (402,404) which is connected to the longitudinal portion (406) and extends perpendicularly with respect to the longitudinal portion (406) of the holder (40).

4. An apparatus as claimed in any of Claims 1 to 3, further comprising a yoke (24) having a shaft portion (22), an upper portion of which is welded to a lower portion of the steering shaft (12).

5. An apparatus as claimed in Claim 4, wherein a bearing (26) is provided between the outer periphery of the shaft portion (22) of the yoke (24) and an inner surface of the lower steering column tube (20).

Fig. 1

10

12

Fig. 2

16

12

14

Fig. 3

Fig. 4

0117611

Fig. 5

Fig. 6

## Fig. 7

(a)    (b)    (c)    (d)

4/4

0117611